# EUROPÄISCHE PATENTSCHRIFT

(11) **EP 3 126 474 B1**
(45) Veröffentlichungstag und Bekanntmachung des Hinweises auf die Patenterteilung: **27.02.2019**
(21) Anmeldenummer: 15719589.2
(22) Anmeldetag: 02.04.2015
(51) Int. Cl.: C10J 3/48, C10K 3/00, C10J 3/64, C10K 3/02, C10B 49/10

(54) **VERFAHREN UND VORRICHTUNG ZUM HERSTELLEN VON BRENNGAS AUS KOHLENSTOFFHALTIGEN FESTEN EINSATZSTOFFEN**
METHOD AND APPARATUS FOR PRODUCING FUEL GAS FROM CARBONACEOUS SOLID MATERIALS
MÉTHODE ET APPAREIL DE PRODUCTION DU GAZ COMBUSTIBLE À PARTIR DE CHARGES CARBONÉES SOLIDES

(30) Priorität: 04.04.2014 AT 2542014
(43) Veröffentlichungstag der Anmeldung: 08.02.2017
(73) Patentinhaber: Seirlehner, Leopold, 4040 Linz (AT)
(72) Erfinder: Seirlehner, Leopold, 4040 Linz (AT)
(74) Vertreter: Keschmann, Marc
(86) Internationale Anmeldenummer: PCT/AT2015/000052
(87) Internationale Veröffentlichungsnummer: WO 2015/149092

(56) Entgegenhaltungen:
- WO-A1-01/02513
- WO-A1-03/033624
- DE-A1-102008 014 799

## Beschreibung

Die Erfindung betrifft ein Verfahren zum Herstellen von Brenngas aus kohlenstoffhaltigen festen Einsatzstoffen sowie eine Vorrichtung zum Durchführen eines solchen Verfahrens.

Die WO 01/02513 A1 offenbart ein Verfahren und eine Vorrichtung zum Herstellen von Brenngas aus kohlenstoffhaltigen festen Einsatzstoffen, dessen Schritte in drei voneinander unabhängigen Reaktoren durchgeführt werden.

Unter kohlenstoffhaltigen festen Einsatzstoffen werden im Rahmen der Erfindung Biomasse und/oder kontaminierte, abfallähnliche organische Stoffe, wie z.B. Klärschlamm, Kunststoffabfälle und Abfälle aus der Elektroschrott-Aufbereitung, und sämtliche vergasungsfähige Reststoffe, verstanden.

Zur Erzeugung von elektrischer Energie durch thermochemische Verarbeitung bzw. Konversion von Biomasse und/oder kontaminierten, insbesondere organisch oder anorganisch kontaminierten, Reststoffen, ist eine Reihe von Verfahren bekannt geworden. Das Grundprinzip der thermochemischen Verarbeitung ist, dass die Einsatzstoffe bei erhöhter Temperatur (meist einige hundert Grad Celsius) unter Sauerstoffmangel umgesetzt werden. Auf diese Art und Weise werden nicht alle organischen Bestandteile unter Freisetzung von Wärme oxidiert, sondern es verbleibt ein wesentlicher Anteil brennbarer Substanzen wie Wasserstoff (H2), Methan (CH4) und Kohlenmonoxid (CO) im erzeugten Gas.

Das entstehende Brenngas kann energetisch genutzt werden, z.B. als Kraftstoff in einem Gasmotor, der zur Erzeugung elektrischer Energie mit einem elektrischen Generator gekoppelt ist.

Eine aus dem Stand der Technik bekannte Möglichkeit der thermochemischen Verarbeitung ist die Konversion von Holz und holzartigen Rest- und Abfallstoffen in Festbett- oder Wirbelschichtvergasern und die Gasnutzung zur Wärmeerzeugung. Die Beschaffenheit und der Heizwert des Reaktionsgases hängen von der Verfahrensführung ab. So erfolgt im Stand der Technik das Konvertieren in einem Festbettvergaser beispielsweise bei niedrigen Temperaturen, um hohe Methangehalte zu erreichen bei ebenso hohem Teeranteil. Weitere bekannte Konversionsverfahren umfassen die luftgeblasene Vergasung von Holz im Pilotmaßstab in einer zirkulierenden Wirbelschicht und die anschließende katalytische Teerspaltung. So kann ein niederkalorisches Brenngas erzeugt werden, das zum Betrieb eines Motoren-Blockheizkraftwerks geeignet ist.

Bei den bekannten Verfahren wurde zur Gewinnung des Brenngases als Konversionsmedium Luft eingesetzt. Durch eine derartige Betriebsweise wird das Brenngas in relativ großem Umfang mit Stickstoff verdünnt, sodass das entstehende Brenngas nur einen geringen Heizwert aufweist und als Schwachgas nur eine geringe elektrische Energieproduktion zulässt.

Grundsätzlich kann der Einsatzstoff nicht zur Gänze in Gas umgesetzt werden, sondern es verbleiben auch feste und kondensierbare Reststoffe (Teer-Fraktion), die weiter behandelt werden müssen. Bei den Feststoffen handelt es sich nicht nur um Asche (im Wesentlichen mineralisch), sondern auch um gewisse Mengen von Kohlenstoff, etwa in Form von Koks. Der Restenergiegehalt solcher Stoffe kann durch Verbrennen noch genutzt werden, wobei sich jedoch die Abgasreinigung aufwändig gestaltet.

Ein weiteres Problem bei herkömmlichen Verfahren ist die Behandlung der Teer-Fraktion des Reaktionsgases. Die Teer-Fraktion kann grundsätzlich auskondensiert werden, dies lässt mit derzeitiger Technologie jedoch noch keine stabile Prozessführung zu. Weiters besteht die Möglichkeit die Teer-Fraktion durch Reforming bzw. Cracken in niedrigmolekulare Kohlenwasserstoffe zu transformieren. Dieses Verfahren führt für das Reaktionsgas jedoch oftmals zu einem unerwünschten Abbau der hohen Methanzahl.

Die Erfindung zielt nun darauf ab, ein Verfahren und eine Vorrichtung der eingangs genannten Art zu schaffen, sodass die oben genannten Nachteile und Probleme zumindest teilweise überwunden und gelöst werden können. Insbesondere soll die Prozesssteuerung erleichtert und die Konversion der Teer-Komponenten zu geeignetem Reaktionsgas verbessert werden. Weiters soll ein leistungsfähiges Brenngas insbesondere für Gas-Ottomotoren erhalten werden.

Zur Lösung dieser Aufgabe umfasst das erfindungsgemäße Verfahren im Wesentlichen die folgenden Schritte:
- Aufgeben der Einsatzstoffe in wenigstens einen Flugstromentgasungsreaktor und zumindest teilweises Entgasen der Einsatzstoffe unter Erzeugung eines Reaktionsgases und eines festen Reststoffes, insbesondere Konversionskoks,
- Austragen der festen Reststoffe, Aufgeben wenigstens einer Teilmenge derselben in einen Kohlevergasungsreaktor und Vergasen der festen Reststoffe unter Erzeugung eines Reaktionsgases und von Asche oder Schlacke, wobei zur Einstellung der Verbrennungsstöchiometrie Sauerstoff und/oder Wasserdampf in den Kohlevergasungsreaktor eingedüst wird,
- Einleiten der Reaktionsgase aus dem Kohlevergasungsreaktor in den wenigstens einen Flugstromentgasungsreaktor, wobei die Reaktionsgase als Wärmeträger für das Beheizen des wenigstens einen Flugstromentgasungsreaktors verwendet werden,
- Einleiten wenigstens eines Teils der Reaktionsgase aus dem wenigstens einen Flugstromentgasungsreaktor in einen Reforming-Reaktor und Cracken der Teer-Fraktion des Reaktionsgases im Reforming-Reaktor, um ein Brenngas zu erhalten, wobei das Cracken im Reforming-Reaktor bei Temperaturen von 750-1.000°C, vorzugsweise unter Verwendung einer Induktionsheizung, insbesondere Graphit-Induktionsheizung, und unter Verwendung von Katalysatoren, wie z.B. Zeolith oder aktivierte Mineralien als Kalkspate, Dolomite und/oder Kalziumaluminate vorgenommen wird, wobei die Einsatzstoffe in einen ersten Flugstromentgasungsreaktor aufgegeben und einer ersten Entgasung unterzogen werden und die festen Reststoffe der ersten Entgasung zumindest teilweise einem zweiten Flugstromentgasungsreaktor zugeführt und einer zweiten Entgasung unterworfen werden, wobei die festen Reststoffe der zweiten Entgasung zumindest teilweise dem Kohlevergasungsreaktor aufgegeben und das Reaktionsgas der zweiten Entgasung zumindest teilweise in den Reforming Reaktor geleitet wird.

Die Erfindung schlägt somit einen dreistufigen Prozess vor, wobei die erste Stufe den wenigstens einen Flugstromentgasungsreaktor, die zweite Stufe den Kohlevergasungsreaktor und die dritte Stufe den Reforming-Reaktor umfasst.

In Flugstromentgasungsreaktoren erfolgt die Entgasung in einem Gasstrom, der mit zerkleinertem Material beladen ist und den Flugstromentgasungsreaktor relativ schnell durchströmt. Dieses Verfahren produziert ein relativ teerarmes Reaktionsgas. Dabei werden die Einsatzstoffe soweit umgesetzt, dass ein so weit wie möglich an flüchtigen Substanzen gasfreier fester Reststoff erhalten wird. Der Austrag der festen Reststoffe aus dem Flugstromentgasungsreaktor erfolgt bevorzugt über einen Grobpartikelabscheider. Der Grobpartikelabscheider ist bevorzugt als Zyklon ausgebildet. Eine Abscheidung von Feinpartikeln kann bevorzugt mittels Keramik-Kerzenfilters erfolgen.

Eine Verbesserung der Energiebilanz des Prozesses gelingt erfindungsgemäß dadurch, dass das im Kohlevergasungsreaktor gebildete Reaktionsgas in den wenigstens einen Flugstromentgasungsreaktor geleitet wird und dort als Wärmeträger für das Beheizen des Flugstromentgasungsreaktors dient. Insbesondere gelingt es den Flugstromentgasungsreaktor durch das Reaktionsgas, d.h. durch die im Kohlevergasungsreaktor freigesetzte Reaktionsenergie allotherm zu beheizen.

Weiters wird dadurch erreicht, dass das Reaktionsgas des Kohlevergasungsreaktors und dasjenige des Flugstromentgasungsreaktors gemeinsam den entsprechenden Weiterbehandlungsschritten, wie z.B. einer Reinigung und einem Cracken der Teer-Fraktion, unterzogen werden können, sodass der anlagentechnische Aufwand minimiert wird. Außerdem führt die erfindungsgemäße Verfahrensweise des Rezirkulierens des Reaktionsgases aus der Flugstromentgasung zur automatischen Inertisierung des gesamten Reaktionskreislaufs. Eine Kostenminderung wird vor allem dadurch erzielt, dass keine latente Wärme von außen - z.B. durch Einbringen eines Inertgases - aufgebracht werden muss, sondern statt dessen die aus dem Reaktionsprozess entstandenen Gase zirkuliert werden. Um das Einbringen des Reaktionsgases aus der Kohlevergasung in den Flugstromentgasungsreaktor zu begünstigen, ist der Kohlevergasungsreaktor vorzugsweise direkt mit dem Flugstromentgasungsreaktor verbunden. Eine dichte Ankopplung des Flugstromentgasungsreaktors an den Kohlevergasungsreaktor bietet außerdem die Möglichkeit, im Kohlevergasungsreaktor gebildete Vergasungsprodukte unter überatmosphärischem Druck in den Flugstromentgasungsreaktor rückzuführen, sodass insgesamt eine Betriebsweise unter überatmosphärischem Druck möglich ist.

In der dritten Stufe des Verfahrens werden zum einen die hochmolekularen Kohlenwasserstoffe soweit gespalten, dass diese schadfrei in einem Gas-Ottomotor verbrannt werden können. Der Schritt des Auskondensierens der Teer-Komponenten kann dadurch umgangen werden.

Insgesamt lässt sich mit der erfindungsgemäßen Verfahrensführung ein geschlossenes Konversionssystem verwirklichen, wobei nur eine Abgas-Reinigungslinie für den Konversions-Prozess und den Reforming-Prozess erforderlich ist. Der Großteil der bei dieser Konversion entstandenen Schadstoffe (beispielsweise Schwefelverbindungen und partiell Schwermetalle) kann bei der erfindungsgemäßen Verfahrensführung durch Rückführung und Vergasung im Kohlevergasungsreaktor entsorgt werden und das Reaktionsgas kann mit höherer Reinheit energetisch genutzt, insbesondere zur Verstromung gebracht werden.

Eine besonders vorteilhafte Umsetzung der Einsatzstoffe gelingt dadurch, dass die Einsatzstoffe in einen ersten Flugstromentgasungsreaktor aufgegeben und einer ersten Entgasung unterzogen werden und die festen Reststoffe der ersten Entgasung zumindest teilweise einem zweiten Flugstromentgasungsreaktor zugeführt und einer zweiten Entgasung unterworfen werden, wobei die festen Reststoffe der zweiten Entgasung zumindest teilweise dem Kohlevergasungsreaktor aufgegeben und das Reaktionsgas der zweiten Entgasung zumindest teilweise in den Reforming-Reaktor geleitet wird.

Im Fall von zwei Flugstromentgasungsreaktoren kann weiters vorgesehen sein, dass das Reaktionsgas aus dem Kohlevergasungsreaktor in den zweiten Flugstromentgasungsreaktor geleitet wird, um Wärmeträger für das Beheizen des zweiten Flugstromentgasungsreaktors zu dienen. Weiters kann bevorzugt vorgesehen sein, dass das Reaktionsgas der ersten Entgasung, ggf. gemeinsam mit dem Reaktionsgas aus dem Kohlevergasungsreaktor, in den zweiten Flugstromentgasungsreaktor geleitet wird. Das Reaktionsgas der ersten Entgasung wird also mit dem Reaktionsgas aus dem Kohlevergasungsreaktor vereint und in den zweiten Flugstromentgasungsreaktor geleitet. Durch die zweistufige Flugstromentgasung wird die Heizenergie des Reaktionsgases infolge der höheren Entgasung der Einsatzstoffe erhöht. Die Leistungserhöhung der Konversion in den Flugstromentgasungsreaktoren führt hierbei zu einer Verbesserung der Gaszusammensetzung mit Rücksicht auf einen hohen Energiegehalt des Brenngases im Prozessbereich der Gas-Ottomotor-Verstromung. Der theoretische Nachteil einer Erhöhung des Konversionsanteils beim Umsetzen der Einsatzstoffe in den Flugstromentgasungsreaktoren liegt in einem geringeren Energieertrag im Kohlevergasungsreaktor, wird aber durch die Vorteile im nachfolgenden Verstromungsprozess übertroffen.

Besonders bevorzugt wird hierbei so vorgegangen, dass die erste Entgasung bei einer tieferen Temperatur, insbesondere bei 400-450°C, als die zweite Entgasung durchgeführt wird, wobei die Temperatur der zweiten Entgasung bevorzugt 450-600°C beträgt.

Eine bevorzugte Verfahrensführung sieht hierbei vor, dass wenigstens ein Teil der Reaktionsgase aus dem wenigstens einen Flugstromentagsungsreaktor in den wenigstens einen Flugstromentgasungsreaktor rückgeführt wird, insbesondere wenigstens ein Teil der Reaktionsgase aus dem zweiten Flugstromentagsungsreaktor in den ersten Flugstromentgasungsreaktor rückgeführt wird.

Um die Verweilzeit der Einsatzstoffe in dem wenigstens einen Flugstromentgasungsreaktor einstellen zu können, insbesondere im Hinblick auf eine Maximierung der Konversionsleistung, wird bevorzugt so vorgegangen, dass eine Teilmenge der festen Reststoffe aus der Flugstromentgasung, insbesondere aus der ersten und/oder zweiten Flugstromentgasung, dem Flugstromentgasungsreaktor, insbesondere dem ersten bzw. zweiten Flugstromentgasungsreaktor, rückgeführt wird. Der Rückführungsanteil kann dabei insbesondere so gewählt werden, dass die Einsatzstoffe soweit umgesetzt werden, dass die festen Reststoffe, insbesondere der Konversionskoks, der Flugstromentgasung so weit wie möglich frei von flüchtigen Substanzen sind. Durch die Einstellung der rückgeführten Menge der partiell konvertierten Reststoffe auf bevorzugt 15 bis 25 Gew.-% der gesamt anfallenden Reststoffmenge wird eine entsprechende Umsetzung des Einsatzstoffes gewährleistet und die Heizenergie des Reaktionsgases erhöht.

Eine weitere bevorzugte Verfahrensführung sieht vor, dass das Reaktionsgas aus dem wenigstens einen Flugstromentgasungsreaktor vor dem Einleiten in den Reforming-Reaktor einer Heißgasreinigung unterworfen wird, wobei der in der Heißgasreinigung abgetrennte Staub, ggf. nach einer Vorwärmung, dem Kohlevergasungsreaktor aufgegeben wird.

Um die Vergasungsreaktion im Kohlevergasungsreaktor steuern zu können, wird die Verbrennungsstöchiometrie eingestellt, wobei dies erfindungsgemäß durch Eindüsen von Sauerstoff und/oder Wasserdampf in den Kohlevergasungsreaktor erfolgt. Vorteilhafterweise kann hierbei Brunnenwasser und/oder kontaminiertes Wasser, wie z.B. kontaminiertes Waschwasser aus einem Wäscher des Prozesses verwendet werden.

Mit Vorteil wird die Vergasungsreaktion im Kohlevergasungsreaktor bei solchen Temperaturen geführt, dass die Reststoffe aus dem Konversionsprozess im Kohlevergasungsreaktor entweder als schwermetallarme bzw. wenig eluierbare Asche ausgetragen (wodurch eine problemlose Deponierung erfolgen kann) oder durch Zugabe von Schlacke bildenden Additiven, insbesondere CaO und SiO2 zur Weiterverwertung geeignet gemacht werden. Insbesondere können im letzteren Fall die latent hydraulischen Eigenschaften der gebildeten Schlacke so beeinflusst werden, dass diese als Zuschlagstoffe, ähnlich wie bei Hochofenschlacke, z.B. in der Zementindustrie weiterverarbeitet werden können.

Wird in diesem Verfahren darauf abgezielt, dass Asche als Rückstandsprodukt erzeugt wird, so sieht eine bevorzugte Weiterbildung des Verfahrens eine Nachverbrennungsstufe in einem Asche-Kühler vor, wo die Asche auf einem Bandförderer in einen Luftstrom gesetzt wird. Dadurch kann der Rest-Kohlenstoffanteil in so hohem Ausmaß nachverbrannt und der Heizwert des Reststoffs dementsprechend so reduziert werden, dass den entsprechenden Bestimmungen für die Deponierung entsprochen wird.

Der Kohlevergasungsreaktor ist bevorzugt im Wesentlichen als zweistufiger Vergaser ausgebildet und umfasst einen multifunktionalen Vergasungsbrenner mit angeschlossener Reaktionskammer. In diesem Brenner sind unterschiedliche Ausformungen implementiert, um verschiedene Brennstoff- und Zuschlagsformen gleichzeitig in die Reaktionskammer einbringen sowie ausreagieren zu können. In vorteilhafter Weise wird der aschebeladene Gasstrom horizontal rotierend in einer vertikalen Strömungsrichtung einer Verjüngung zugeführt, um das je nach Betriebsweise erhaltene Asche- oder Schlacke-Produkt auszuschleusen.

Das Cracken der Teer-Fraktionen des Reaktionsgases erfolgt erfindungsgemäß in einem induktiv beheizten Festbettreaktor, insbesondere auf glühendem Graphit bei 750-1000°C, vorzugsweise bei 800 bis 900°C, wobei zusätzlich Katalysatoren, z.B. Zeolithe oder aktivierte Mineralien als Kalkspate, Dolomite und/oder Kalziumaluminate, im Reforming-Reaktor eingebracht sein können.

Das aus dem Reforming-Reaktor austretende Brenngas weist eine Temperatur von ca. 800-900°C auf, wobei die fühlbare Wärme des Brenngases zum Vorwärmen des in den Reforming-Reaktor einzuleitenden Reaktionsgases genutzt werden kann. Eine bevorzugte Verfahrensführung sieht daher vor, dass das Reaktionsgas aus dem wenigstens einen Flugstromvergasungsreaktor vor dem Einleiten in den Reforming-Reaktor auf Temperaturen von 750-850°C vorgewärmt wird, wobei das Vorwärmen vorzugsweise in einem Wärmetauscher im Wärmeaustausch mit dem aus dem Reforming-Reaktor austretenden Brenngas erfolgt.

Das aus dem Reforming-Reaktor austretende Brenngas kann zum Zwecke der Zwischenspeicherung zur späteren energetischen Nutzung einem Speicherbehälter, insbesondere einem Gasometer zugeführt werden. Davor ist bevorzugt eine

Gaswäsche vorgesehen, wobei das Waschwasser der Gaswäsche, ggf. nach einer Vorwärmung in einem Wärmetauscher, zur Einstellung der gewünschten Vergasungsbedingungen in den Kohlevergasungsreaktor eingedüst werden kann.

Das mit dem erfindungsgemäßen Verfahren hergestellte Brenngas kann besonders vorteilhaft in einem Gasmotor energetisch verwertet werden. Der Gasmotor ist dabei bevorzugt mit einem elektrischen Generator gekoppelt, sodass eine Verstromung des Brenngases gelingt.

Die fühlbare Wärme des aus dem Reforming-Reaktor austretenden Brenngases kann vor dessen Speicherung genutzt werden. Dazu wird bevorzugt so vorgegangen, dass das Brenngas unter Wärmeabgabe an ein Wärmeträgermedium, insbesondere Thermoöl, abgekühlt wird. Der entsprechende Wärmetauscher ist bevorzugt vor der Gaswäsche angeordnet.

Alternativ oder zusätzlich besteht die Möglichkeit auch die Restwärme des Abgases des Gasmotors zu nutzen. In diesem Zusammenhang wird bevorzugt so vorgegangen, dass die Abgase des Gasmotors unter Wärmeabgabe an ein Wärmeträgermedium, insbesondere Thermoöl, abgekühlt werden.

Das Wärmeträgermedium kann dabei bevorzugt im Kreislauf geführt werden, wobei der Kreislauf wenigstens einen Wärmetauscher zum Erwärmen bzw. Verdampfen des Wärmeträgermediums und wenigstens einen Wärmetauscher zum Abkühlen des Wärmeträgermediums aufweist. Die Erwärmung bzw. Verdampfung des Wärmeträgermediums erfolgt dabei bevorzugt im Wärmeaustausch mit zwei unterschiedlichen Stoffströmen des Prozesses, bevorzugt durch Wärmeaustausch mit dem Brenngas und dem Abgas des Gasmotors.

Der Kreislauf kann als thermodynamischer Kreisprozess, insbesondere eines ORC-Prozesses ausgebildet sein. Bevorzugt ist der Kreislauf selbst nicht als thermodynamischer Kreisprozess ausgebildet, sondern dient nur als Zwischenwärmespeicher, um die Wärme in der Folge an einen gesonderten thermodynamischen Kreisprozess abzugeben. Das Verfahren ist in diesem Zusammenhang bevorzugt derart weitergebildet, dass das Wärmeträgermedium, insbesondere Thermoöl in einem Wärmetauscher gekühlt wird, um ein Arbeitsmedium eines thermodynamischen Kreisprozesses zu verdampfen. Bevorzugt ist der thermodynamische Kreisprozess als Gasturbinenprozess ausgebildet, sodass in einfacher Art und Weise eine Umwandlung des thermischen Energieinhalts des Wärmeträger- bzw. Arbeitsmediums in mechanische Energie und in weiterer Folge in elektrische Energie gelingt. Um dem niedrigen Temperaturniveau des Arbeitsmediums Rechnung zu tragen, ist eine Ausbildung des thermodynamischen Kreisprozesses als Organic Rankine Cycle besonders bevorzugt. Dieser thermodynamische Kreisprozess zeichnet sich dadurch aus, dass ein anderes Arbeitsmedium als Wasserdampf zum Einsatz gelangt. Das Organic Rankine Cycle (ORC)-Verfahren kommt vor allem dann zum Einsatz, wenn das zur Verfügung stehende Temperaturgefälle zwischen Wärmequelle und -senke zu niedrig für den Betrieb einer von Wasserdampf angetriebenen Turbine ist. Mögliche Arbeitsmedien sind beispielsweise Ammoniak, R12, HFC-245fa, HFC-245ca, R11 oder HFC-236fa oder Gemische davon.

Bevorzugt wird im Rahmen des thermodynamischen Kreisprozesses so vorgegangen werden, dass das Arbeitsmedium des thermodynamischen Kreisprozesses unter Verwendung von Luft gekühlt wird, wobei die erwärmte Luft, ggf. nach einer weiteren Erwärmung durch Wärmeaustausch mit dem Abgas des Gasmotors, in ein Trocknungsaggregat zum Trocknen der Einsatzstoffe eingeblasen wird. Auf diese Art und Weise kann die Abwärme aus der Kühlung des Arbeitsmediums zum Vortrocknen der Einsatzstoffe genutzt werden.

Ein weiterer Aspekt der Erfindung betrifft eine Vorrichtung zur Durchführung des erfindungsgemäßen Verfahrens, umfassend wenigstens einen Flugstromentgasungsreaktor, einen Kohlevergasungsreaktor, dem wenigstens eine Teilmenge der festen Reststoffe aus dem Flugstromentgasungsreaktor zugeführt ist und dessen Reaktionsgase zur Gänze in den wenigstens einen Flugstromentgasungsreaktor geführt sind, und einen als Festbettreaktor ausgebildeten Reforming-Reaktor, dem die Reaktionsgase aus dem wenigstens einen Flugstromentgasungsreaktor zugeführt sind und der eine Austragsöffnung für Brenngas aufweist, wobeiein erster Flugstromentgasungsreaktor und ein zweiter Flugstromentgasungsreaktor vorgesehen sind, die miteinander verbunden sind, sodass zumindest eine Teilmenge der festen Reststoffe aus dem ersten Flugstromentgasungsreaktor dem zweiten Flugstromentgasungsreaktor zuführbar ist, und dass der zweite Flugstromentgasungsreaktor mit dem Kohlevergasungsreaktor verbunden ist, sodass wenigstens eine Teilmenge der festen Reststoffe aus dem zweiten Flugstromentgasungsreaktor dem Kohlevergasungsreaktor zuführbar ist.

Eine bevorzugte Weiterbildung sieht vor, dass der erste und/oder der zweite Flugstromentgasungsreaktor eine Rückführungsleitung zum Rezirkulieren einer Teilmenge der ausgetragenen festen Reststoffe in den jeweiligen Reaktor aufweist.

Eine bevorzugte Weiterbildung sieht vor, dass das Reaktionsgas des ersten Flugstromentgasungsreaktors mit dem Reaktionsgas aus dem Kohlevergasungsreaktor vereint und nachfolgend dem zweiten Flugstromentgasungsreaktor zur finalen Entgasung der Einsatzstoffe zugeführt ist.

Eine bevorzugte Weiterbildung sieht vor, dass in der Verbindung zwischen dem wenigstens einen Flugstromentgasungsreaktor und dem Reforming-Reaktor eine Heißgasreinigung angeordnet ist, deren Staubaustrag, ggf. unter Zwischenschaltung eines Vorwärmers, mit dem Kohlevergasungsreaktor in Verbindung steht.

Erfindungsgemäß ist weiters vorgesehen, dass der Reforming-Reaktor eine Induktionsheizung, insbesondere Graphit-Induktionsheizung, und Katalysatoren, wie z.B. oder aktivierte Mineralien als Kalkspate, Dolomite und/oder Kalziumaluminate, umfasst.

Eine bevorzugte Weiterbildung sieht vor, dass in der Verbindung zwischen dem wenigstens einen Flugstromvergasungsreaktor und dem Reforming-Reaktor ein Wärmetauscher zum Vorwärmen des Reaktionsgases angeordnet ist.

Eine bevorzugte Weiterbildung sieht vor, dass ein Gasmotor vorgesehen ist, dem das Brenngas zugeführt ist.

Eine bevorzugte Weiterbildung sieht vor, dass ein Kreislauf für ein Wärmeträgermedium, insbesondere Thermoöl, vorgesehen ist, der wenigstens einen Wärmetauscher zum Aufwärmen des Wärmeträgermediums und wenigstens einen Wärmetauscher zum Abkühlen des Wärmeträgermediums umfasst.

Eine bevorzugte Weiterbildung sieht vor, dass wenigstens ein Wärmetauscher zum Aufwärmen des Wärmeträgermediums mittels der Abgase des Gasmotors unter Wärmeabgabe an das Wärmeträgermedium ausgeführt ist.

Eine bevorzugte Weiterbildung sieht vor, dass der wenigstens eine Wärmetauscher zum Aufwärmen des Wärmeträgermediums mittels des Brenngases unter Wärmeabgabe an das Wärmeträgermedium ausgebildet ist.

Eine bevorzugte Weiterbildung sieht vor, dass der Kreislauf als thermodynamischer Kreisprozess, insbesondere ORC-Prozess, ausgebildet ist.

Eine bevorzugte Weiterbildung sieht vor, dass der wenigstens eine Wärmetauscher zum Abkühlen des Wärmeträgermediums mittels eines Arbeitsmediums eines thermodynamischen Kreisprozesses, insbesondere eines ORC-Prozesses, unter Wärmeabgabe an das Arbeitsmedium zum Verdampfen desselben ausgebildet ist.

Eine bevorzugte Weiterbildung sieht vor, dass der thermodynamische Kreisprozess einen Wärmetauscher zum Abkühlen des Arbeitsmediums aufweist, der von Luft als Kühlmittel durchströmbar ist, wobei die erwärmte Luft, ggf. nach einer weiteren Erwärmung durch Wärmeaustausch mit dem Abgas des Gasmotors, einem Trocknungsaggregat zum Trocknen der Einsatzstoffe zugeführt ist.

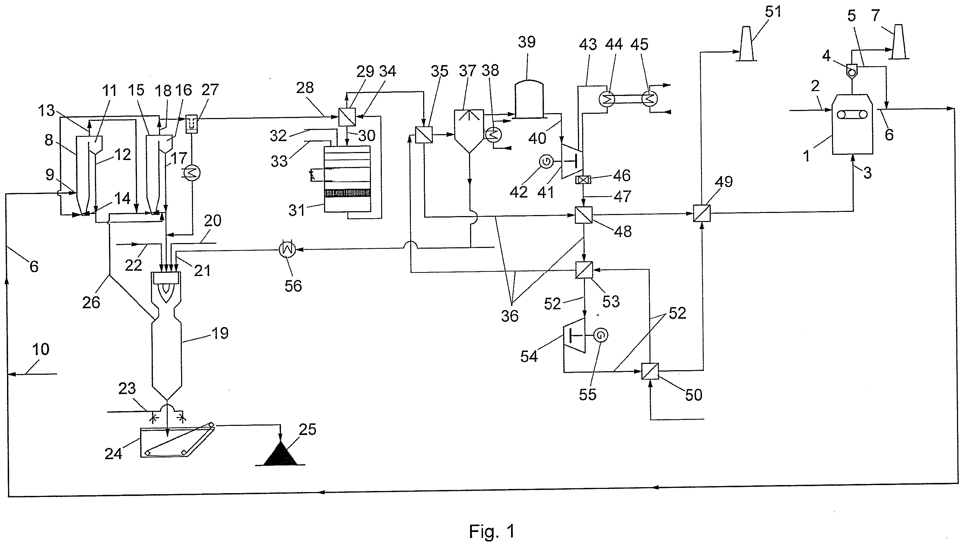

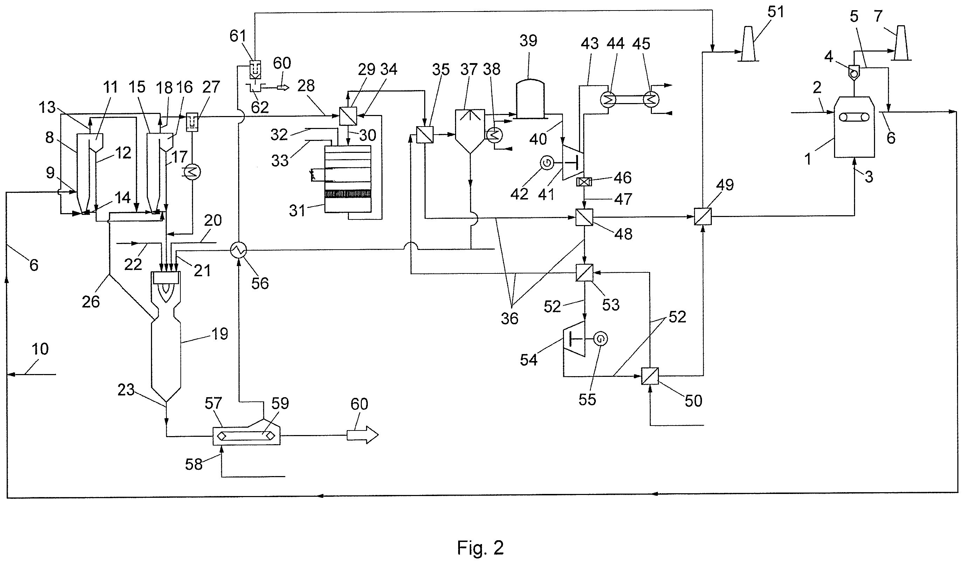

Die Erfindung wird nachfolgend an Hand von in der Zeichnung schematisch dargestellten Ausführungsbeispielen näher erläutert. In dieser zeigt Fig. 1 ein Fließbild mit Schlacke-Austrag einer ersten Ausführung der Erfindung und Fig. 2 ein Fließbild mit Asche-Austrag einer zweiten Ausführung der Erfindung.

In Fig. 1 ist mit 1 ein Trocknungsaggregat für die zu verarbeitenden Einsatzstoffe bezeichnet. Als Einsatzstoffe können Biomasse und/oder kontaminierte, abfallähnliche organische Stoffe, wie z.B. Klärschlamm, Kunststoffabfälle und/oder Abfälle aus der Elektroschrott-Aufbereitung, und generell sämtliche konversionsfähige Reststoffe verwendet werden. Die Einsatzstoffe werden dem Trocknungsaggregat 1 bei 2 aufgegeben. Zum Trocken wird vorgewärmte Luft 3 verwendet, wie weiter unten noch näher erläutert wird. Die feuchte Abluft aus dem Trockner 1 wird einer Entstaubung 4 zugeführt, wobei der abgetrennte Feststoffanteil 5 den getrockneten Einsatzstoffen 6 zugegeben wird und die Abluft über einen Kamin 7 in die Atmosphäre emittiert wird.

Die getrockneten Einsatzstoffe 6 mit einer Restfeuchte von ∼ 20% werden dem ersten Flugstromentgasungsreaktor 8 über eine Öffnung 9 im Fußbereich zugeführt. Im Anfahrbetrieb kann den getrockneten Einsatzstoffen 6 Inertgas 10 zugegeben werden. Im ersten Flugstromentgasungsreaktor 8 erfolgt eine Entgasung der Einsatzstoffe, um ein Reaktionsgas und feste Reststoffe zu erhalten. Die festen Reststoffe werden in einem Grobpartikelabscheider 11 abgeschieden und bei 12 ausgetragen. Das von Grobpartikeln befreite Reaktionsgas wird bei 13 abgezogen. Ein Teil der ausgetragenen Reststoffe wird dem ersten Flugstromentgasungsreaktor 8 bei 14 rückgeführt. Der nicht rückgeführte Anteil wird dem zweiten Flugstromentgasungsreaktor 15 zur weiteren Entgasung aufgegeben. Der zweite Flugstromentgasungsreaktor 15 ist im Wesentlichen gleich ausgebildet wie der erste Flugstromentgasungsreaktor 8. Es ist wieder ein Grobpartikelabscheider 16 vorgesehen, wobei die abgeschiedenen Reststoffe bei 17 ausgetragen werden. Das von Grobpartikeln befreite Reaktionsgas wird bei 18 abgezogen. Ein Teil der ausgetragenen Reststoffe wird dem zweiten Flugstromentgasungsreaktor 15 rückgeführt. Der nicht rückgeführte Anteil wird dem Kohlevergasungsreaktor 19 aufgegeben.

Zur Einstellung der Verbrennungsstöchiometrie im Kohlevergasungsreaktor 19 wird bei 20 Sauerstoff und bei 21 Wasserdampf zugeführt. Je nach Betriebsweise werden bei 22 Zuschlagstoffe aufgegeben, um Schlacke oder Asche als Reststoff zu erhalten. Bei der Schlacke-Betriebsweise (Fig. 1) werden im Kohlevergasungsreaktor 19 die Prozessparameter so gewählt, dass eine Schlackenbasizität von 0,8 bis 1,2 erreicht wird mit vorzugsweise CaO und SiO2 als Zuschlagstoff, ähnlich wie beim Hochofenprozess, sodass die latent-hydraulischen Eigenschaften ein dermaßen günstiges Ausmaß annehmen und eine Verglasung der mineralischen Fraktion so einsetzt, um als Zementzuschlagstoff geeignet zu sein. Die gebildeten Schlackepartikel werden bei 23 mittels Granulierwasser abgekühlt, um von der kristallinen in die amorphe Phase übergeführt zu werden. In der Granuliervorrichtung 24 wird die gewünschte Kornausformung eingestellt und nach 25 ausgetragen.

Die aus der Vergasung im Kohlevergasungsreaktor 19 gebildete Prozesswärme wird mit dem Reaktionsgas über 26 in den zweiten Flugstromentgasungsreaktor 15 geleitet, um die Aufbringung der nötigen Wärme zur Entgasung sicherzustellen.

Das bei 13 aus dem ersten Flugstromentgasungsreaktor 8 ausgebrachte Reaktionsgas wird mit dem Reaktionsgas 26 aus dem Kohlevergasungsreaktor 19 vereint und dem zweiten Flugstromentgasungsreaktor 15 zugeführt.

Das bei 18 aus dem zweiten Flugstromentgasungsreaktor 15 ausgebrachte Reaktionsgas wird zum Großteil in den ersten Flugstromentgasungsreaktor 8 zur teilweisen Entgasung der eingebrachten Ströme 6 und 14 geleitet.

Der nicht in den Flugstromentgasungsreaktor 8 rückgeführte Teil von 18 aus den Flugstromentgasungsreaktor 15 wird einer Heißgasreinigung 27 unterworfen, wobei der Feinstaubaustrag aus der Heißgasreinigung 27 den aus dem zweiten Flugstromentgasungsreaktor 15 ausgetragenen Reststoffen beigemischt und in den Kohlevergasungsreaktor 19 zur partiellen Oxidation eingeblasen wird. Die Heißgasreinigung 27 ist bevorzugt eine Heißgasfiltration.

Das in der Heißgasreinigung 27 gereinigte Reaktionsgas wird bei 28 einem Wärmetauscher 29 zugeführt und dort auf 750 bis 850°C aufgeheizt. Das erwärmte Reaktionsgas wird bei 30 in den Reforming-Reaktor 31 eingeblasen, in dem die polyzyklischen Aromaten und hochmolekularen Kohlenwasserstoffe zu kurzkettigen Kohlenwasserstoffen nahezu quantitativ abgebaut werden. Hier kann in einer Oxidations-Zone Sauerstoff bei 32 und Wasserdampf bei 33 eingeblasen und mit dem Reaktionsgas homogen vermischt werden. Anschließend wird das Reaktionsgas im Reforming-Reaktor 31 durch eine Graphit-Induktionsheizung bei konstanten Reaktionsbedingungen, vorzugsweise bei 900°C, und Katalysatoren, wie z.B. Zeolithe oder aktivierte Mineralien als Kalkspate, Dolomite und Kalziumaluminate, gecrackt. Das aus dem Reforming-Reaktor 31 austretende Brenngas wird bei 34 in den Wärmetauscher 29 eingespeist, um das ungecrackte Reaktionsgas vorzuwärmen. Das Brenngas durchströmt in weiterer Folge den Wärmetauscher 35, um ein in einem Kreislauf 36 laufendes Thermoöl vorzuwärmen. Das Brenngas wird danach einem Gaswäscher 37 zugeführt, in dem das Brenngas von Rest-Verunreinigungen befreit und durch den integrierten Wärmetauscher 38 auf die nötige Temperatur abgekühlt wird, um dieses im Gasometer 39 speichern zu können.

Aus dem Gasometer 39 wird das Brenngas bei 40 in den Gas-Ottomotor 41 eingebracht und energetisch verwertet. Der an den Gas-Ottomotor 41 gekoppelte Generator 42 transformiert die produzierte mechanische Energie in elektrische Energie. Aus dem Kühlwasserkreislauf 43 des Gas-Ottomotor 41 wird bei 44 Wärme ausgekoppelt und bei 45 zum Beispiel in ein Nah- oder Fernwärmenetz eingespeist bzw. für anderweitige exergetische Prozessführungen herangezogen.

Das aus der energetischen Verwertung im Gas-Ottomotor 41 generierte Abgas wird mittels selektiver katalytischer NOx-Reduktion 46 gereinigt und tritt bei 47 in einen Wärmetauscher 48 ein, der das im Kreislauf 36 laufende, im Wärmetauscher 35 bereits vorgewärmte Thermoöl weiter aufheizt. Die Restwärme des Abgases wird im Wärmetauscher 49 genutzt, um die vom Wärmetauscher 50 kommende, vorgewärmte Trockenluft auf die notwendige Prozesstemperatur aufzuwärmen. Über den Kamin 51 wird das Abgas in die Atmosphäre emittiert.

Der Kreislauf eines ORC-Prozesses (Organic Rankine Cylce) ist mit 52 bezeichnet. Das Arbeitsmedium des ORC-Prozesses tritt in den als Wärmetauscher ausgebildeten Verdampfer 53 ein und wird im Wärmeaustausch mit dem im Kreislauf 36 laufenden Thermoöl verdampft, wobei das abgekühlte Thermoöl im Wärmetauscher 35 wieder vorgewärmt wird und das verdampfte Arbeitsmedium in die ORC-Turbine 54 eintritt. Die mechanische Energie aus der ORC-Turbine 54 wird im Generator 55 zu elektrischer Energie transformiert und die Abwärme des expandierten Arbeitsmediums wird in den Wärmetauscher 50 eingebracht, um die Trockenluft für das Trocknungsaggregat 1 vorzuwärmen.

Vorteilhafterweise wird in diesem Verfahren neben Brunnenwasser das kontaminierte Waschwasser aus dem Gaswäscher 37 für den Wasser- bzw. Sattdampfbedarf des Kohlevergasungsreaktors 19 herangezogen, das im Wärmetauscher 56 vorgewärmt wird.

Die Ausführung gemäß Fig. 2 unterscheidet sich von der Ausführung gemäß Fig. 1 dadurch, dass der Austrag aus dem Kohlevergasungsreaktor für einen Asche-Austrag statt eines Schlacke-Austrags ausgebildet ist. Die übrigen Prozess- und Anlagenteile entsprechen denen aus Fig. 1, sodass die Bezugszeichen aus Fig. 1 beibehalten wurden. Die Asche wird im Kohlevergasungsreaktor 19 unter Eindüsung von Wasser- bzw. Sattdampf bei 21 und Sauerstoff bei 20 gebildet und nach 23 in einen Umluft-Aschekühler 57 ausgetragen. Im Speziellen wird in diesem Prozessabschnitt ein Luftstrom so über die Asche geführt, dass eine Nachverbrennung des Rest-Kohlenstoff-Gehalts in der Asche stattfindet. Die kalte Asche wird zur weiteren Verfrachtung bei 60 zwischenzeitlich deponiert. Von der heißen Asche wird mittels Frischluft (Eintritt bei 58) die Restwärme mittels eines Bandförder-Wärmetauschers 59 abgezogen und zum Vorwärmen des Prozesswassers aus dem Gaswäscher 37 in den Wärmetauscher 56 eingespeist. Die staubbeladene Luft wird einer Gasreinigung 61 zugeführt, um die Luft zum Entlassen in die Atmosphäre über den Kamin 51 aufzubereiten. Die in der Gasreinigung 61 abgeschiedene Asche wird in einem Behälter 62 zur Zwischendeponierung in 60 vorbereitet.

Im Folgenden werden die Umsetzungsvorgänge in den drei Stufen des erfindungsgemäßen Verfahrens und die jeweiligen Enthalpiedifferenzen näher erläutert. 1. Stufe: Flugstromentgasungsreaktor

Hier werden die flüchtigen Bestandteile der Einsatzstoffe vom festen Reststoff (insbesondere Konversionskoks) abgetrennt und zur weiteren Verarbeitung in die jeweilige Prozessstufe überführt.

CxHyOzSwClpFr ⇆ a H2O + b H2 + c CO + d CO2 + e C + f H2S + g HCl + h HF ΔH0 = >0

### 2. Stufe: Kohlevergasungsreaktor

Im Kohlevergasungsreaktor wird der verbleibende Energieinhalt des Konversionskokses in einem Hochtemperatur-Prozess zu thermischer Energie umgesetzt, um die nötige Wärme für die prozessinternen Arbeitsschritte aufbringen zu können. In diesem Arbeitsschritt wird als Reststoff je nach Bedarf Asche oder Schlacke in einem Trocken- oder Nassgranulationsverfahren produziert.
1. 2

   C(s) + 02 ⇆ 2 CO

   ΔH0 = -110,5 kJ.mol-1
2.

   C (s) + 2 H2 ⇆ CH4

   (heterogene Methanbildungs-R.) ΔH0 = -87,5 kJ.mol-1
3.

   C(s) + H2O ⇆ CO + H2

   (heterogene Wassergas-R.) ΔH0 = +131,3 kJ.mol-1
4.

   C(s) + CO2 ⇆ 2 CO

   (Boudouard-Gleichgewicht) ΔH0 = +172,4 kJ.mol-1
5.

   C(s) + O2 ⇆ CO2

   ΔH0 = -393,5 kJ.mol-1
6.

   CO + H2O ⇆ CO2 + H2

   (Wassergas-Shift-Reaktion) ΔH0 = -41,2 kJ.mol-1

### 3. Stufe: Reforming-Reaktor

Hier werden die hochverzweigten kondensierten Kohlenwasserstoffe des gewonnenen Reaktionsgases in einem Methanisierungsprozess bestmöglich zu verstrombarem Prozessgas gecrackt, das in einem Otto-Gasmotor mit gekoppeltem Generator zu elektrischer Energie umgesetzt werden kann.
1.

   CO + H2O ⇔ CO2 + H2

   (Wassergas-Shift-Reaktion) ΔH0 = -41,2 kJ.mol-1
2.

   CO + 3 H2 ⇔ CH4 + H2O

   (Methanisierung) ΔH0 = -206,2 kJ.mol-1
3.

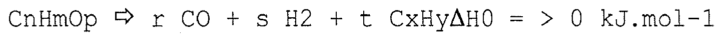

## Patentansprüche

1. Verfahren zum Herstellen von Brenngas aus kohlenstoffhaltigen festen Einsatzstoffen umfassend die Schritte:
- Aufgeben der Einsatzstoffe in wenigstens einen Flugstromentgasungsreaktor und zumindest teilweises Entgasen der Einsatzstoffe unter Erzeugung eines Reaktionsgases und eines festen Reststoffes, insbesondere Konversionskoks,
- Austragen der festen Reststoffe, Aufgeben wenigstens einer Teilmenge derselben in einen Kohlevergasungsreaktor und Vergasen der festen Reststoffe unter Erzeugung eines Reaktionsgases und von Asche oder Schlacke, wobei zur Einstellung der Verbrennungsstöchiometrie Sauerstoff und/oder Wasserdampf in den Kohlevergasungsreaktor eingedüst wird,
- Einleiten der Reaktionsgase aus dem Kohlevergasungsreaktor in den wenigstens einen Flugstromentgasungsreaktor, wobei die Reaktionsgase als Wärmeträger für das Beheizen des wenigstens einen Flugstromentgasungsreaktors verwendet werden,
- Einleiten wenigstens eines Teils der Reaktionsgase aus dem wenigstens einen Flugstromentgasungsreaktor in einen Reforming-Reaktor und Cracken der Teer-Fraktion des Reaktionsgases im Reforming-Reaktor, um ein Brenngas zu erhalten, wobei das Cracken im Reforming-Reaktor bei Temperaturen von 750-1.000°C, vorzugsweise unter Verwendung einer Induktionsheizung, insbesondere Graphit-Induktionsheizung, und unter Verwendung von Katalysatoren, wie z.B. Zeolith oder aktivierte Mineralien als Kalkspate, Dolomite und/oder Kalziumaluminate vorgenommen wird, **dadurch gekennzeichnet, dass** die Einsatzstoffe in einen ersten Flugstromentgasungsreaktor aufgegeben und einer ersten Entgasung unterzogen werden und die festen Reststoffe der ersten Entgasung zumindest teilweise einem zweiten Flugstromentgasungsreaktor zugeführt und einer zweiten Entgasung unterworfen werden, wobei die festen Reststoffe der zweiten Entgasung zumindest teilweise dem Kohlevergasungsreaktor aufgegeben und das Reaktionsgas der zweiten Entgasung zumindest teilweise in den Reforming-Reaktor geleitet wird.

2. Verfahren nach Anspruch 1, **dadurch gekennzeichnet, dass** das Reaktionsgas aus dem Kohlevergasungsreaktor in den zweiten Flugstromentgasungsreaktor geleitet wird.

3. Verfahren nach Anspruch 1 oder 2, **dadurch gekennzeichnet, dass** das Reaktionsgas der ersten Entgasung, ggf. gemeinsam mit dem Reaktionsgas aus dem Kohlevergasungsreaktor, in den zweiten Flugstromentgasungsreaktor geleitet wird.

4. Verfahren nach Anspruch 1, 2 oder 3, **dadurch gekennzeichnet, dass** die erste Entgasung bei einer Temperatur von 400-450°C und die zweite Entgasung bei einer Temperatur von 450-600°C durchgeführt werden.

5. Verfahren nach einem der Ansprüche 1 bis 4, **dadurch gekennzeichnet, dass** wenigstens ein Teil der Reaktionsgase aus dem wenigstens einen Flugstromentagsungsreaktor in den wenigstens einen Flugstromentgasungsreaktor rückgeführt wird, insbesondere wenigstens ein Teil der Reaktionsgase aus dem zweiten Flugstromentagsungsreaktor in den ersten Flugstromentgasungsreaktor rückgeführt wird.

6. Verfahren nach einem der Ansprüche 1 bis 5, **dadurch gekennzeichnet, dass** eine Teilmenge der festen Reststoffe aus der Flugstromentgasung, insbesondere aus der ersten und/oder zweiten Flugstromentgasung, dem Flugstromentgasungsreaktor, insbesondere dem ersten bzw. zweiten Flugstromentgasungsreaktor, rückgeführt wird.

7. Verfahren nach einem der Ansprüche 1 bis 6, **dadurch gekennzeichnet, dass** das Reaktionsgas aus dem wenigstens einen Flugstromentgasungsreaktor vor dem Einleiten in den Reforming-Reaktor einer Heißgasreinigung unterworfen wird, wobei der in der Heißgasreinigung abgetrennte Staub, ggf. nach einer Vorwärmung, dem Kohlevergasungsreaktor aufgegeben wird.

8. Verfahren nach einem der Ansprüche 1 bis 7, **dadurch gekennzeichnet, dass** das Reaktionsgas aus dem wenigstens einen Flugstromentgasungsreaktor vor dem Einleiten in den Reforming-Reaktor auf Temperaturen von 750-850°C vorgewärmt wird, wobei das Vorwärmen vorzugsweise in einem Wärmetauscher im Wärmeaustausch mit dem aus dem Reforming-Reaktor austretenden Brenngas erfolgt.

9. Vorrichtung zur Durchführung des Verfahrens nach einem der Ansprüche 1 bis 9, umfassend wenigstens einen Flugstromentgasungsreaktor (8), einen Kohlevergasungsreaktor (19), dem wenigstens eine Teilmenge der festen Reststoffe aus dem Flugstromentgasungsreaktor (8) zugeführt ist und dessen Reaktionsgase zur Gänze in den wenigstens einen Flugstromentgasungsreaktor (8) geführt sind, und einen als Festbettreaktor ausgebildeten Reforming-Reaktor (31), dem die Reaktionsgase aus dem wenigstens einen Flugstromentgasungsreaktor (8) zugeführt sind und der eine Austragsöffnung für Brenngas aufweist, wobei der Reforming-Reaktor (31) eine Induktionsheizung, insbesondere Graphit-Induktionsheizung, und Katalysatoren, wie z.B. Zeolith oder aktivierte Mineralien als Kalkspate, Dolomite und/oder Kalziumaluminate, umfasst, **dadurch gekennzeichnet, dass** ein erster Flugstromentgasungsreaktor (8) und ein zweiter Flugstromentgasungsreaktor (15) vorgesehen sind, die miteinander verbunden sind, sodass zumindest eine Teilmenge der festen Reststoffe aus dem ersten Flugstromentgasungsreaktor (8) dem zweiten Flugstromentgasungsreaktor (15) zuführbar ist, und dass der zweite Flugstromentgasungsreaktor (15) mit dem Kohlevergasungsreaktor (19) verbunden ist, sodass wenigstens eine Teilmenge der festen Reststoffe aus dem zweiten Flugstromentgasungsreaktor (15) dem Kohlevergasungsreaktor (19) zuführbar ist.

10. Vorrichtung nach Anspruch 9, **dadurch gekennzeichnet, dass** der erste (8) und/oder der zweite Flugstromentgasungsreaktor (15) eine Rückführungsleitung zum Rezirkulieren einer Teilmenge der ausgetragenen festen Reststoffe in den jeweiligen Reaktor aufweist.

11. Vorrichtung nach Anspruch 9 oder 10, **dadurch gekennzeichnet, dass** in der Verbindung zwischen dem wenigstens einen Flugstromentgasungsreaktor (8) und dem Reforming-Reaktor (31) eine Heißgasreinigung (27) angeordnet ist, deren Staubaustrag, ggf. unter Zwischenschaltung eines Vorwärmers, mit dem Kohlevergasungsreaktor (19) in Verbindung steht.

12. Vorrichtung nach Anspruch 9, 10 oder 11, **dadurch gekennzeichnet, dass** in der Verbindung zwischen dem wenigstens einen Flugstromvergasungsreaktor (8) und dem Reforming-Reaktor (31) ein Wärmetauscher (29) zum Vorwärmen des Reaktionsgases angeordnet ist.

## Claims

1. A method for producing fuel gas from carbonaceous solid feedstocks, comprising the steps of:
- charging the feedstocks into at least one entrained flow degasification reactor, and at least partially degassing the feedstocks while producing a reaction gas and solid residue, in particular conversion coke;
- discharging the solid residue, charging at least a partial amount thereof into a coal gasification reactor, and gasifying the solid residue while producing a reaction gas and ashes or slag, wherein oxygen and/or steam is nozzled into the coal gasification reactor for adjusting the combustion stoichiometry;
- injecting the reaction gases from the coal gasification reactor into the at least one entrained flow degasification reactor, wherein the reaction gases are used as heat transfer media for heating the at least one entrained flow degasification reactor;
- injecting at least a portion of the reaction gases from the at least one entrained flow degasification reactor into a reforming reactor, and cracking the tar fraction of the reaction gas in the reforming reactor to obtain fuel gas, said cracking in the reforming reactor being performed at temperatures of 750-1000°C, preferably by using an induction heater, in particular a graphite induction heater, and by using catalysts such as zeolite or activated minerals as calcites, dolomites and/or calcium aluminates,
**characterized in that** the feedstocks are charged into a first entrained flow degasification reactor and subjected to a first degasification, and the solid residue from the first degasification is at least partially fed to a second entrained flow degasification reactor and subjected to a second degasification, wherein the solid residue of the second degasification is at least partially charged into the coal gasification reactor and the reaction gas of the second degasification is at least partially conducted into the reforming reactor.

2. A method according to claim 1, **characterized in that** the reaction gas from the coal gasification reactor is conducted into the second entrained flow degasification reactor.

3. A method according to claim 1 or 2, **characterized in that** the reaction gas of the first degasification is conducted into the second entrained flow degasification reactor, optionally along with the reaction gas from the coal gasification reactor.

4. A method according to claim 1, 2 or 3, **characterized in that** the first degasification is performed at a temperature of 400-450°C and the second degasification is performed at a temperature of 450-600°C.

5. A method according to any one of claims 1 to 4, **characterized in that** at least a portion of the reaction gases from the at least one entrained flow degasification reactor is returned into the at least one entrained flow degasification reactor and, in particular, at least a portion of the reaction gases from the second entrained flow degasification reactor is returned into the first entrained flow degasification reactor.

6. A method according to any one of claims 1 to 5, **characterized in that** a partial amount of the solid residue from entrained flow degasification, in particular from the first and/or the second entrained flow degasification, is returned to the entrained flow degasification reactor, in particular the first or second entrained flow degasification reactor, respectively.

7. A method according to any one of claims 1 to 6, **characterized in that** the reaction gas from the at least one entrained flow degasification reactor is subjected to hot gas cleaning prior to injection into the reforming reactor, wherein the dust separated by said hot gas cleaning is charged into the coal gasification reactor, optionally after preheating.

8. A method according to any one of claims 1 to 7, **characterized in that** the reaction gas from the at least one entrained flow degasification reactor is preheated to temperatures of 750-850°C prior injection into the reforming reactor, said preheating being preferably performed in a heat exchanger by heat exchange with the fuel gas emerging from the reforming reactor.

9. A device for carrying out the method according to any one of claims 1 to 9, comprising at least one entrained flow degasification reactor (8), a coal gasification reactor (19), to which at least a partial amount of the solid residue from the entrained flow degasification reactor (8) is fed and whose reaction gases are completely conducted into the at least one entrained flow degasification reactor (8), and a reforming reactor (31) designed as a fixed bed reactor, to which the reaction gases from the at least one entrained flow degasification reactor (8) are fed and which comprises a discharge opening for fuel gas, said reforming reactor (31) comprising an induction heater, in particular a graphite induction heater, and catalysts such as zeolite or activated minerals as calcites, dolomites and/or calcium aluminates, **characterized in that** a first entrained flow degasification reactor (8) and a second entrained flow degasification reactor (15) are provided, which are connected to each other such that at least a partial amount of the solid residue from the first entrained flow degasification reactor (8) is feedable to the second entrained flow degasification reactor (15), and that the second entrained flow degasification reactor (15) is connected to the coal gasification reactor (19) such that at least a partial amount of the solid residue from the second entrained flow degasification reactor (15) is feedable to the coal gasification reactor (19).

10. A device according to claim 9, **characterized in that** the first (8) and/or the second (15) entrained flow degasification reactor comprise a return duct for recirculating a partial amount of the discharged solid residue into the respective reactor.

11. A device according to claim 9 or 10, **characterized in that** hot gas cleaning (27) is provided in the connection between the at least one entrained flow degasification reactor (8) and the reforming reactor (31), the dust discharge of said hot gas cleaning communicating with the coal gasification reactor (19), optionally via an interposed preheater.

12. A device according to claim 9, 10 or 11, **characterized in that** a heat exchanger (29) for preheating the reaction gas is arranged in the connection between the at least one entrained flow degasification reactor (8) and the reforming reactor (31).

## Revendications

1. Procédé de production de gaz combustible à partir de charges carbonées solides, comprenant les étapes consistant à :
- verser les charges dans au moins un réacteur de dégazage à flux entraîné et dégazer au moins en partie les charges en produisant un gaz réactionnel et une substance résiduelle solide, en particulier du coke de conversion ;
- décharger les substances résiduelles solides, verser au moins une quantité partielle de celles-ci dans un réacteur de gazéification de charbon et gazéifier les substances résiduelles solides en produisant un gaz réactionnel et des cendres ou des scories, dans lequel, pour régler la stoechiométrie de combustion, de l'oxygène et/ou de la vapeur d'eau est/sont injecté(e)s dans le réacteur de gazéification de charbon,
- introduire les gaz réactionnels provenant du réacteur de gazéification de charbon dans le au moins un réacteur de dégazage à flux entraîné, dans lequel les gaz réactionnels sont utilisés comme agent caloporteur pour chauffer le au moins un réacteur de dégazage à flux entraîné ;
- introduire au moins une partie des gaz réactionnels provenant du au moins un réacteur de dégazage à flux entraîné dans un réacteur de reformage ; et effectuer le craquage de la fraction de goudron du gaz réactionnel dans le réacteur de reformage afin d'obtenir un gaz combustible, dans lequel le craquage dans le réacteur de reformage est mis en oeuvre à des températures de 750 à 1 000 °C, de préférence en utilisant un chauffage par induction, en particulier un chauffage par induction au graphite, et en utilisant des catalyseurs, par exemple une zéolite ou des minéraux activés comme la calcite, la dolomite et/ou l'aluminate de calcium, **caractérisé en ce que** les charges sont versées dans un premier réacteur de dégazage à flux entraîné et soumises à un premier dégazage, et les substances résiduelles solides provenant du premier dégazage sont acheminées au moins partiellement à un second réacteur de dégazage à flux entraîné et sont soumises à un second dégazage, dans lequel les substances résiduelles solides du second dégazage sont versées au moins partiellement dans le réacteur de gazéification de charbon et le gaz réactionnel du second dégazage est au moins partiellement envoyé dans le réacteur de reformage.

2. Procédé selon la revendication 1, **caractérisé en ce que** le gaz réactionnel est envoyé du réacteur de gazéification de charbon dans le second réacteur de dégazage à flux entraîné.

3. Procédé selon la revendication 1 ou 2, **caractérisé en ce que** le gaz réactionnel du premier dégazage est envoyé, éventuellement conjointement avec le gaz réactionnel provenant du réacteur de gazéification de charbon, dans le second réacteur de dégazage à flux entraîné.

4. Procédé selon la revendication 1, 2 ou 3, **caractérisé en ce que** le premier dégazage est effectué à une température de 400 à 450 °C et le second dégazage est effectué à une température de 450 à 600 °C.

5. Procédé selon l'une quelconque des revendications 1 à 4, **caractérisé en ce qu'**au moins une partie du gaz réactionnel issu du au moins un réacteur de dégazage à flux entraîné est recyclé dans le au moins un réacteur de dégazage à flux entraîné, en particulier au moins une partie du gaz réactionnel issu du second réacteur de dégazage à flux entraîné est recyclée dans le premier réacteur de dégazage à flux entraîné.

6. Procédé selon l'une quelconque des revendications 1 à 5, **caractérisé en ce qu'**une quantité partielle des substances résiduelles solides est recyclée du dégazage à flux entraîné, en particulier du premier dégazage à flux entraîné et/ou du second dégazage à flux entraîné, au réacteur de dégazage à flux entraîné, en particulier au premier ou au second réacteur de dégazage à flux entraîné.

7. Procédé selon l'une quelconque des revendications 1 à 6, **caractérisé en ce que** le gaz réactionnel issu du au moins un réacteur de dégazage à flux entraîné est soumis, avant d'être introduit dans le réacteur de reformage, à un nettoyage au gaz chaud, dans lequel la poussière séparée durant le nettoyage au gaz chaud est chargée, éventuellement après un préchauffage, dans le réacteur de gazéification de charbon.

8. Procédé selon l'une quelconque des revendications 1 à 7, **caractérisé en ce que** le gaz réactionnel issu du réacteur de dégazage à flux entraîné est préchauffé avant d'être introduit dans le réacteur de reformage à des températures de 750 à 850 °C, dans lequel le préchauffage se fait de préférence dans un échangeur de chaleur en échange de chaleur avec le gaz combustible provenant du réacteur de reformage.

9. Dispositif pour exécuter le procédé selon l'une quelconque des revendications 1 à 9, comprenant au moins un réacteur de dégazage à flux entraîné (8), un réacteur de gazéification de charbon (19) auquel est acheminée au moins une quantité partielle des substances résiduelles solides du réacteur de dégazage à flux entraîné (8) et dont les gaz réactionnels sont entièrement conduit dans le au moins un réacteur de dégazage à flux entraîné (8), et un réacteur de reformage (31) sous la forme d'un réacteur à lit fixe, auquel sont acheminés les gaz réactionnels issus du au moins un réacteur de dégazage à flux entraîné (8), et qui comporte une ouverture de décharge pour du gaz combustible, dans lequel le réacteur de reformage (31) comporte un chauffage par induction, en particulier un chauffage par induction au graphite, et des catalyseurs, par exemple une zéolite ou des minéraux activés comme la calcite, la dolomite et/ou un aluminate de calcium, **caractérisé en ce que** sont prévus un premier réacteur de dégazage à flux entraîné (8) et un second réacteur de dégazage à flux entraîné (15) qui sont interconnectés de manière qu'au moins une quantité partielle des substances résiduelles solides puisse être acheminée du premier réacteur de dégazage à flux entraîné (8) au second réacteur de dégazage à flux entraîné (15) et **en ce que** le second réacteur de dégazage à flux entraîné (15) est raccordé au réacteur de gazéification de charbon (19), de sorte qu'au moins une quantité partielle des substances résiduelles solides puisse être acheminée du second réacteur de dégazage à flux entraîné (15) au réacteur de gazéification de charbon (19).

10. Dispositif selon la revendication 9, **caractérisé en ce que** le premier (8) et/ou le second réacteur de dégazage à flux entraîné (15) comprend ou comprennent une conduite de recyclage pour recycler une quantité partielle des substances résiduelles solides déchargées dans le réacteur respectif.

11. Dispositif selon la revendication 9 ou 10, **caractérisé en ce qu'**est agencé dans la liaison entre le au moins un réacteur de dégazage à flux entraîné (8) et le réacteur de reformage (31) un nettoyage au gaz chaud dont l'évacuation des poussières, éventuellement avec l'interposition d'un préchauffeur, se fait en liaison avec le réacteur de gazéification de charbon (19).

12. Dispositif selon la revendication 9, 10 ou 11, **caractérisé en ce qu'**un échangeur de chaleur (29) servant à préchauffer le gaz réactionnel est disposé dans la liaison entre le au moins un réacteur de gazéification à flux entraîné (8) et le réacteur de reformage (31).
